(19) Europäisches Patentamt
European Patent Office
Office européen des brevets

(11) **EP 2 623 955 A1**

(12) **EUROPEAN PATENT APPLICATION**
published in accordance with Art. 153(4) EPC

(43) Date of publication:
**07.08.2013 Bulletin 2013/32**

(51) Int Cl.:
***G01N 17/00*** (2006.01)   ***F21S 2/00*** (2006.01)

(21) Application number: **11828495.9**

(22) Date of filing: **16.03.2011**

(86) International application number:
**PCT/JP2011/056210**

(87) International publication number:
**WO 2012/042931 (05.04.2012 Gazette 2012/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2010 JP 2010219232**

(71) Applicant: **Sharp Kabushiki Kaisha**
**Osaka-shi, Osaka 545-8522 (JP)**

(72) Inventor: **NAKAMURA, Atsushi**
**Osaka 545-8522 (JP)**

(74) Representative: **Müller - Hoffmann & Partner**
**Patentanwälte**
**Innere Wiener Strasse 17**
**81667 München (DE)**

(54) **SIMULATED SOLAR LIGHT IRRADIATION APPARATUS**

(57) A light guide member of the pseudo-sunlight irradiation apparatus is formed of eight light guide plates WG1' - WG8' arrayed in one direction. A light diffusing part formed of a plurality of dot-like protrusions 701, 702 is formed on a surface opposite to an irradiating surface of each of the light guide plates WG1' - WG8'. A dot diameter of the dot-like protrusions 701 of the light guide plates WG1', WG8' positioned at ends in the one direction orthogonal to the light guide direction of the light guide plates WG1' - WG8' is made larger than a dot diameter of the dot-like protrusions 702 of the light guide plates WG2' - WG7' positioned at central portions other than the ends in the one direction.

*Fig.5A*

TOWARD CENTER OF PSEUDO-SUNLIGHT
IRRADIATION APPARATUS

701     702

WG1'    WG2'    WG3'

**Description**

TECHNICAL FIELD

The present invention relates to pseudo-sunlight irradiation apparatuses for irradiation with pseudo-sunlight. For example, the invention relates to a pseudo-sunlight irradiation apparatus usable as a solar simulator for evaluating I-V characteristics of solar cell panels. The invention also relates to pseudo-sunlight irradiation apparatuses suitable for, e.g., use in measurement tests (discoloration and fading tests of cosmetics, paints, adhesives, and various types of materials) of various types of solar-energy utilizing equipment, use in acceleration/deterioration tests of those equipment, and use in irradiation of farm products with light.

BACKGROUND ART

In recent years, as solar cell panels have been increasingly advanced toward larger-sizes, there has been growing a demand for apparatuses capable of irradiation with artificial light close to sunlight (pseudo-sunlight). In particular, with a background of rapid advancement and prevalence of solar cell technology, there has been a desire for apparatuses which are capable of exerting large-area irradiation with pseudo-sunlight of high precision so as to be usable for tests, measurements and experiments of solar cells.

Primary elements required for pseudo-sunlight are that its spectrum is close to that of standard sunlight (established by JIS (Japanese Industrial Standard)), that the pseudo-sunlight has an illuminance equivalent to that of standard sunlight, and that uniform illuminance is necessary on an irradiated surface.

A solar cell panel of two-layer multilayered type (tandem structure) or three-layer multilayered type (triple structure) is so structured that solar cells of different spectral sensitivities are connected in series inside the panel. For evaluation of power generation characteristics of these solar cell panels, since a wavelength range that induces power generation differs among the individual layers, it is necessary to evaluate output characteristics of solar cell panels by light having a spectrum similar to that of sunlight. Also, in a case where low-illuminance areas are formed on solar cell panels, portions of the solar cell panels corresponding to the area increase in internal resistance. For this reason, although enough power generation capability is ensured in other areas of the solar cell panels, the effective output lowers to a large extent. Accordingly, for high-precision evaluation of output characteristics of solar cell panels, there is a need for using light having a spectrum similar to that of standard sunlight as well as uniform illuminance over the irradiated surface.

Techniques with such contrivances as shown above applied are disclosed in PTL 1 (JP 2009-145254 A) and PTL 2 (JP 3500352 A).

The pseudo-sunlight irradiation apparatus (solar simulator) of PTL 1 is so designed that light emitted from a light source is transmitted by a filter for use of spectral adjustment to generate a spectrum similar to that of standard sunlight. Also, this pseudo-sunlight irradiation apparatus is so designed as to utilize both light that directly reaches an irradiated surface and light that is allowed by reflecting plates to reach an irradiated surface.

The pseudo-sunlight irradiation apparatus of PTL 2 is so designed as to use two light sources and an optical filter for controlling spectra of the individual light sources to generat a spectrum similar to that of standard sunlight.

However, the pseudo-sunlight irradiation apparatus of PTL 1 necessitates adjusting the reflecting member to realize illuminance uniformization at the irradiated surface, taking time for maintenance work. Thus, there is a problem that the irradiation uniformization at the irradiated surface cannot be realized simply.

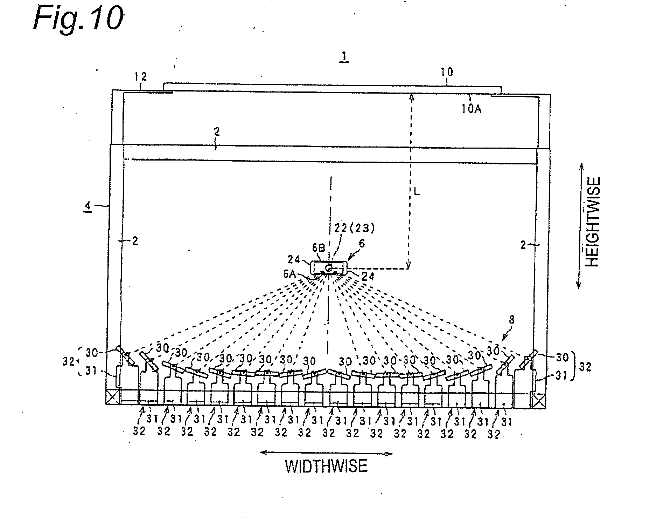

Fig. 10 is an outlined view of an irradiation optical system of that pseudo-sunlight irradiation apparatus. In this figure, reference numeral 22 (23) denotes a xenon lamp or the like. Numeral 6 denotes a pseudo-sunlight irradiation box, in which a filter for spectral adjustment is provided. Numeral 30 denotes reflecting plates for reflecting light, which is radiated toward a side counter to the irradiated surface, toward the irradiated surface side. The reflecting plates can be adjusted in angle of reflection independently of one another. Therefore, to realize illuminance uniformization at the irradiated surface, it is necessary to adjust angles of all the reflecting plates 30 shown in Fig. 10, posing a problem that the illuminance uniformization at the irradiated surface is difficult to fulfill and moreover a low precision of uniformization results. Besides, there is another problem that maintenance work such as lamp replacement takes time.

In the pseudo-sunlight irradiation apparatus of PTL 2, since the angle of incidence on the spectral adjustment filter varies over a wide range, there is a problem that the spectrum of pseudo-sunlight departs from that of standard sunlight depending on the incident angle dependence of the filter.

Further, conventionally, there has been a surface light source device disclosed in JP H8-334765 A (PTL 3).

Unfortunately, in this surface light source device, a quantity of light emitted from an edge portion of a surface is smaller than a quantity of light emitted from a central portion of the surface, posing a problem that uniform light cannot be emitted.

CITATION LIST

Patent Literature

PTL 1: JP 2009-145254 A

PTL 2: JP 3500352 A

PTL 3: JP H8-334765 A

SUMMARY OF INVENTION

Technical Problem

Accordingly, an object of the present invention is to provide a pseudo-sunlight irradiation apparatus capable of emitting pseudo-sunlight having less local variations in illuminance at the irradiated surface.

Solution to Problem

In order to achieve the above object, a pseudo-sunlight irradiation apparatus for irradiating an irradiated surface with light having an emission spectrum of sunlight comprises:

a light guide member including an incident surface for allowing light to be incident thereon, and an irradiating surface for irradiating the irradiated surface with light guided from the incident surface; and
a correction part for performing correction so that an illuminance at the irradiated surface irradiated from a central portion of the light guide member and an illuminance at the irradiated surface irradiated from any one of end portions orthogonal to a light guide direction of the light guide member are made uniform.

According to the present invention, the correction part makes it possible to lessen a difference between an illuminance at the irradiated surface irradiated from the central portion of the light guide member and an illuminance at the irradiated surface irradiated from any one of end portions orthogonal to the light guide direction of the light guide member. Thus, pseudo-sunlight having less local illuminance variations can be emitted at the irradiated surface.

In one embodiment, the correction part includes a light diffusing part for scattering light incident on the incident surface of the light guide member and extracting light from the irradiating surface, and
the light diffusing part is formed at different area ratios between the central portion of the light guide member and the end portion of the light guide member so as to achieve an illuminance uniformity.

According to this embodiment, illuminance uniformization at the irradiated surface can be achieved with simplicity and low cost.

In one embodiment,

the light guide member is formed of a plurality of light guide elements, and
the light diffusing part of each light guide element has a plurality of light diffusion processing parts, where the light diffusion processing parts are made to have difference thereamong in at least one of shape, area and shortest neighboring distance so that the area ratio is higher in a light guide element positioned at the end portion than in a light guide element positioned at the central portion.

The light diffusion processing part is formed of, for example, protrusions or groove-shaped recess portions.

According to this embodiment, the light diffusing part can be manufactured with simplicity and low cost. Further, uniform light based on an emission position and free from variations in luminosity can be generated with simplicity and low cost.

In one embodiment, the light guide member is formed of a plurality of light guide elements, and

a light guide element positioned at the end portion meets at least one of conditions, i.e. being thinner in thickness than a light guide element positioned at the central portion or being smaller in width than a light guide element positioned at the central portion, so that the light guide element positioned at the end portion is higher in area ratio than a light guide element positioned at the central portion.

According to this embodiment, the number of times of total reflection of light within light guide elements at end portions can be made larger than the number of times of total reflection of light within light guide elements at central portions so that the probability of collisions of light within the end-positioned light guide elements against the light diffusing parts can be made higher than the probability of collisions of light within the central-positioned light guide elements against the light diffusing parts. Further, by proper placement of the taper member for optical coupling in line of the end-positioned light guide element, it becomes possible to obtain a high coupling ratio, for all the light guide elements, at which light from the light source is coupled with the light guide elements.

In one embodiment, the pseudo-sunlight irradiation further comprises a spectrum adjustment filter for adjusting light, which is derived from a light source for making light incident on the incident surface, to light having an emission spectrum of sunlight.

According to this embodiment, pseudo-sunlight can be generated with simplicity.

In one embodiment, the pseudo-sunlight irradiation further comprises a taper member for controlling directivity of light derived from the light source so that incident angle of light incident on the spectrum adjustment filter is restricted to within a certain range.

According to this embodiment, the incident angle of light to be incident on the spectral adjustment filter can be restricted to within a certain range, so that desired filter characteristics can be obtained.

In one embodiment, the pseudo-sunlight irradiation further comprises a light diffusing member which is placed at such a position as to allow light radiated from the irradiating surface of the light guide member to be incident thereon and which diffuses light radiated from the irradiating surface of the light guide member.

According to this embodiment, local light-quantity variations at the irradiated surface can be further suppressed, so that irradiation with more uniform light at the irradiated surface can be fulfilled.

In one embodiment, the pseudo-sunlight irradiation further comprises a reflecting member for allowing light leaked from the light guide member to pass via inside of the light guide member and reach the irradiating surface.

According to this embodiment, even light leaked from portions other the irradiating surface of the light guide member can also be utilized, so that the quantity of emitted light can be increased.

Advantageous Effects of Invention

According to the pseudo-sunlight irradiation apparatus of the invention, the correction part makes it possible to lessen, as compared with the conventional, a difference between an illuminance at the irradiated surface irradiated from a central portion of the light guide member and an illuminance at the irradiated surface irradiated from any one of end portions orthogonal to the light guide direction of the light guide member. Thus, pseudo-sunlight having less local illuminance variations can be emitted at the irradiated surface.

According to the pseudo-sunlight irradiation apparatus of one embodiment, the apparatus includes a plurality of light guide elements disposed in an array form as an example, and each of the light guide elements has a light diffusing part, where light guide elements at both ends out of the plurality of light guide elements in the array form become higher in quantity of light that collides with the light diffusing parts or higher in a probability that light propagating inside the light guide elements collides with the light diffusing parts. As a result, the quantity of light emitted from end-positioned light guide elements is increased. Thus, illuminance variations at the irradiated surface can be reduced.

With the light guide elements disposed in an array form in adjacency to one another, light radiated from a targeted light guide element and light radiated from its neighboring light guide elements are cumulated together at the irradiated surface. Since, in comparison between near-central-positioned light guide elements and end-positioned light guide elements, end-positioned light guide elements are smaller in number of neighboring light guide elements than central-positioned light guide elements, the enhancement of light quantity from end-positioned light guide elements makes it possible to suppress relative decreases in illuminance at end portions in the irradiation region, so that irradiation with pseudo-sunlight having less illuminance variations can be fulfilled.

Also, since light becomes incident inside light guide elements from side faces of the light guide elements and the light is propagated to the irradiated surface by the light diffusing parts, the light source can be provided on side faces of the apparatus as a whole. Therefore, an easy access to the light source is enabled, so that maintenance work such as lamp replacement can be fulfilled with simplicity.

Also according to the pseudo-sunlight irradiation apparatus of one embodiment, since the light diffusing parts are given a gradient of their size or the placement intervals of the light diffusing parts include sparse and dense ones, illuminance uniformization of light emitted from the light guide elements can be fulfilled.

Light incident on a side face of a light guide element propagates inside the light guide element, while the light is extracted outside by the light diffusing part. Therefore, as the propagation distance becomes longer, the quantity of propagating light decreases gradually. Given that light diffusing parts formed in the light guide elements are uniform in all, the quantity of light emitted from near central portions of the light guide element is decreased, so that illuminance variations occur in the propagation direction of the light guide element. Thus, by size increase or density enhancement of the light diffusing part near central portions of the light guide element, illuminance uniformization of light emitted from the light guide elements can be fulfilled.

Also, with the size of the light diffusing part given a gradient in a direction orthogonal to the propagation direction or with sparse and dense portions of the light diffusing parts, it becomes possible to achieve illuminance uniformization in the direction orthogonal to the propagation direction in a case where the light guide elements are disposed in an array form.

Also according to the pseudo-sunlight irradiation apparatus of one embodiment, since an optical member for diffusing emitted light is provided on the surface side of light extraction from the light guide elements, more illuminance uniformization at the irradiated surface can be fulfilled.

Also according to the pseudo-sunlight irradiation apparatus of one embodiment, the apparatus includes a reflecting member for allowing light leaked from the light guide member to pass via inside of the light guide member and reach the irradiating surface. Therefore, even light leaked from portions other the irradiating surface of the light guide member can also be utilized, so that the quantity of emitted light can be increased and the use efficiency of light can be enhanced.

BRIEF DESCRIPTION OF DRAWINGS

Fig. 1 is a perspective view of a pseudo-sunlight irradiation apparatus according to a first embodiment of the present invention;

Fig. 2 is an outlined structural view of a light guide plate of the pseudo-sunlight irradiation apparatus;
Fig. 3A is a view showing a pattern of a light diffusing part in the first embodiment;
Fig. 3B is a view showing a pattern of a light diffusing part in a modification of the first embodiment;
Fig. 3C is a view showing a pattern of a light diffusing part in a modification of the first embodiment;
Fig. 4A shows an illuminance distribution in an $\alpha$-axis direction (a propagation direction of the light guide plate) at $\beta = 0$ in an irradiated surface shown in Fig. 1;
Fig. 4B shows an illuminance distribution in a $\beta$-axis direction (a direction orthogonal to propagation direction of the light guide plate) at $\alpha = 0$ in the irradiated surface shown in Fig. 1;
Fig. 5A is a view showing an example of the light diffusing part for prevention of illuminance decreases at ends of an irradiation range;
Fig. 5B is a view showing an illuminance distribution in the $\beta$-axis direction at $\alpha = 0$ mm in an $\alpha\beta$ plane of the irradiated surface;
Fig. 6A is a view showing a light diffusing part according to a modification of the first embodiment and also showing a light diffusing part for preventing illuminance decreases at ends of an irradiation range;
Fig. 6B is a view showing a light diffusing part according to a modification of the first embodiment and also showing a light diffusing part for preventing illuminance decreases at ends of an irradiation range;
Fig. 7A is a view showing part of a pseudo-sunlight irradiation apparatus according to a second embodiment, and also is a schematic view showing a reflector, a spectral adjustment filter, and an optical member inserted therebetween;
Fig. 7B is a top view of a taper member as viewed from a light irradiation side;
Fig. 7C is a view of the taper member as viewed from a side face side;
Fig. 8 is a view showing the pseudo-sunlight irradiation apparatus of the second embodiment;
Fig. 9A is a perspective view of an optical system forming part of a pseudo-sunlight irradiation apparatus according to a third embodiment;
Fig. 9B is a perspective view of an optical system forming part of a pseudo-sunlight irradiation apparatus according to a third embodiment; and and
Fig. 10 is a view showing a structure of a pseudo-sunlight irradiation apparatus according to a prior art.

DESCRIPTION OF EMBODIMENTS

Hereinbelow, the present invention will be described in detail by embodiments thereof illustrated in the accompanying drawings.

(First Embodiment)

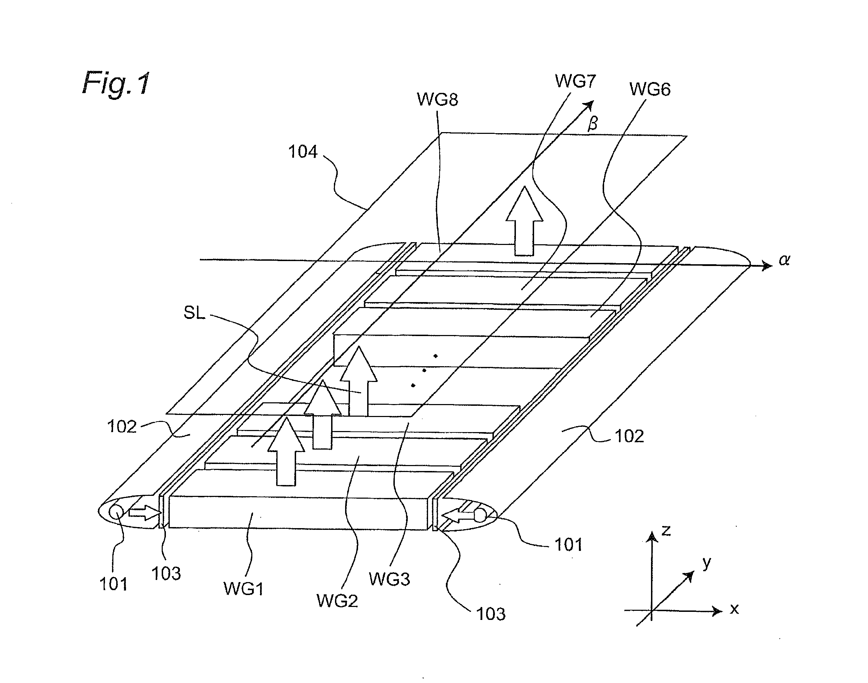

Fig. 1 is a perspective view of a pseudo-sunlight irradiation apparatus according to a first embodiment of the invention.

This pseudo-sunlight irradiation apparatus, having a light source 101, applies light derived from the light source 101 in coupling with light guide plates WG1 - WG8 serving as flat plate-shaped light guide elements so as to exert irradiation with pseudo-sunlight over a wide range. The pseudo-sunlight irradiation apparatus has eight light guide plates WG1 - WG8 having a width of 225 mm. The eight light guide plates WG1 - WG8 form a light guide member. The eight light guide plates WG1 - WG8 are so disposed that light guide directions of all the individual light guide plates WG1 - WG8 generally coincide with one another. Also, the eight light guide plates WG1 - WG8 are so disposed as to be spaced from one another in a direction orthogonal to their light guide direction. Each of the light guide plates WG1 - WG8 has an incident surface on which light comes incident, a light guide part for guiding light that has become incident on the incident surface and that is derived from the light source 101, and an irradiating surface for emitting light that has been guided by the light guide part and that is derived from the light source 101. It is noted that the light guide part refers to a part corresponding to an extent over which the light having been incident on the incident surface reaches the irradiating surface.

The light source 101 is not limited and may be selected as required depending on the purpose. Usable as the light source 101 are, for example, xenon lamps, halogen lamps, UV lamps, metal halide lamps, and the like. Also usable as the light source 101 are light emitting diodes (LEDs), ELs or the like that are adjusted to an emission spectrum of pseudo-sunlight.

Light emitted from the light source 101 is directed toward the light guide plates WG by reflectors 102. In this first embodiment, ones having an elliptical-shaped surface are adopted as the reflectors 102. However, the reflectors are not limited to this, and those having a circular-shaped surface, a paraboloidal-shaped surface, or an aspherical-shaped surface may also be adopted as the reflectors.

Spectral adjustment filters 103 for use of spectral adjustment are inserted between the light source 101 and the light guide plates WG1 - WG8. The spectral adjustment filters 103 act to attenuate the transmittance in a particular wavelength range of light emitted from the light source 101. The spectral adjustment filters 103 make it possible to provide irradiation with light having an arbitrary spectrum. Also, particularly when air mass filters are used as the spectral adjustment filters 103, it becomes possible to generate pseudo-sunlight of high similarity to the solar spectrum.

In addition, as the spectral adjustment filters 103, any one may be adopted only if the filter is enabled to give a spectral distribution by attenuating the transmittance in a particular wavelength range of light derived from the light source 101. For example, various optical filters or the like such as air mass filters, high-pass filters and low-pass filters may be selected and used as required depending on the purpose. Also, the spectral adjustment filters 103 may also be given by either a singular filter of one kind or a combination of different spectral adjustment filters of two or more kindss.

In this first embodiment, light from a singular light source is guided to the light guide plates WG1 - WG8. However, in this invention, light from a plurality of light sources may also be guided to the light guide plates to generate light close to the solar spectrum.

Light incident on the light guide plates WG1 - WG8 propagates inside the light guide plates WG1 - WG8. Also, light incident on the light guide plates WG1 - WG8 is extracted outside from a surface other than the incident surface of the light by a later-described light diffusing part in each of the light guide plates WG1 - WG8. Light SL extracted from each of the light guide plates WG1 - WG8 (outgoing light from the light guide plates) is emitted toward an irradiated surface 104.

In this way, in the pseudo-sunlight irradiation apparatus, a spectral distribution of light emitted from the light source 101 is generated. Subsequently, while the light emitted from the light source 101 is coupled with the light guide plates WG1 - WG8, light from the light guide plates WG1 - WG8 is extracted outside so as to make the irradiated surface 104 irradiated therewith. It is noted that in the first embodiment, an area of the target region of the irradiated surface 104 is set to 1000 mm (x-axis direction) $\times$ 1600 mm (y-axis direction). However, of course, the irradiated surface region is not limited to this.

Each of the light guide plates WG1 - WG8 has a prismatic shape. A reflecting member is provided on a lower side of the light guide plates WG1 - WG8 (on a side counter to the irradiated surface 104 side). This is intended to reflect light having come out of the lower surfaces of the light guide plates WG1 - WG8 to their upper surfaces so as to enhance the use efficiency of light.

In addition, the pseudo-sunlight irradiation apparatus may include a cooling device for cooling constituent members, optical components and the like in order to suppress effects of heat derived from the light source. Also, a plurality of light shielding means may be provided inside the pseudo-sunlight irradiation apparatus for the purpose of stray light countermeasure or fine adjustment of illuminance variations.

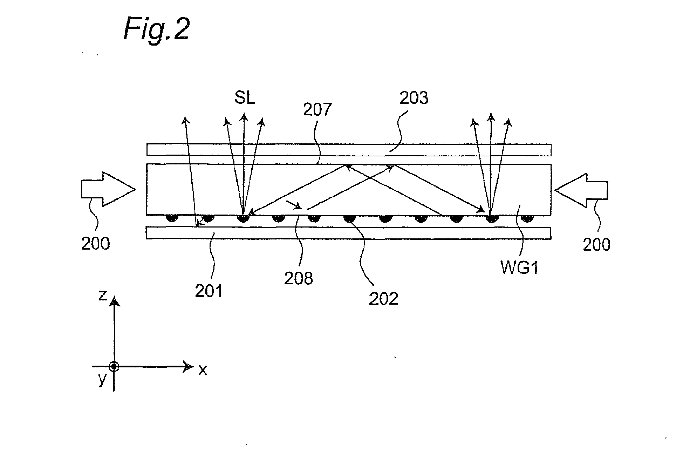

Fig. 2 is an outlined structural view of the light guide plate WG1. It is noted that the light guide plates WG2 - WG8 are similar in structure to the light guide plate WG1. Description of the light guide plates WG2 - WG8 is substituted and omitted by description of the light guide plate WG1.

The light guide plate WG1 has a light diffusing part 202 in at least one of surfaces parallel to the light guide direction of the light guide plates WG.

Part of light emitted from the light source 101 (see Fig. 1) is formed into pseudo-sunlight 200 by the spectral adjustment filters 103, and thereafter coupled with the light guide plate WG1. The coupled light propagates inside the light guide plate WG1 while repeating total reflection. A light diffusing part 202 is formed in an opposing surface 208 opposite to an irradiating surface 207 of the light guide plate WG1.

The light diffusing part 202 is made up by mixing diffusion particles of about 1 $\mu$m to several $\mu$m diameters into a transparent resin. The light diffusing part 202 can be formed by patterning or the like on the light guide plate WG1 by printing.

Light incident on the light diffusing part 202 formed on one surface of the light guide plate WG1 is diffused (scattered) with disturbance of its total reflection conditions. The diffused (scattered) light, not meeting the total reflection conditions, is radiated outside from the light guide plate WG1. Also, light diffused (scattered) and leaking on the lower side (toward the -z-axis direction) of the light guide plate WG1 is reflected toward the irradiated surface 104 (see Fig. 1) by a reflecting plate 201 (reflecting member) provided on the lower side of the light guide plate WG1. For material of the reflecting plate 201, materials of large reflectivity such as aluminum or other metal films, high-reflectivity polycarbonates and white scatter plates may be used.

In addition, for reduction of illuminance variations, a light diffusing member 203 is provided on an optical path directed from the light guide plates WG1 - WG8 to the irradiated surface 104.

The light guide plates WG1 - WG8 used in the first embodiment are prismatic-shaped ones. However, the shape of the light guide plates is not limited to a prismatic-shaped one, and the shape of their cross section in a direction orthogonal to the light guide direction of the light guide plates WG1 - WG8 (x-axis direction in Fig. 2) may be either a polygonal shape other than quadrilateral ones or a round shape. Also, the length of the light guide plates in their light guide direction may be changed according to their applied use.

Referring again to Fig. 2, the light diffusing part 202, which is made up by mixing diffusion particles in a transparent resin, is patterned into the light guide plate WG1 by printing, as described above.

In the light guide plate WG1 shown in Fig. 2, light having propagated inside the light guide plate WG1 and having reached the light diffusing part 202 is diffused by the light diffusing part 202. Then, with the total reflection conditions disturbed by the diffusion, the light is extracted outside of the light guide plate WG1, reaching the irradiated surface 104. Therefore, whether or not illuminance variations of the irradiated surface 104 result depends on the area and position of the light diffusing part 202.

In the pseudo-sunlight irradiation apparatus of the first embodiment, the light diffusing part 202 is so made up that the configuration and disposition of its pattern are determined based on coordinates set on the light guide plate WG1, i.e., in the longitudinal direction (x-axis direction) and the shorter-length direction (y-axis direction).

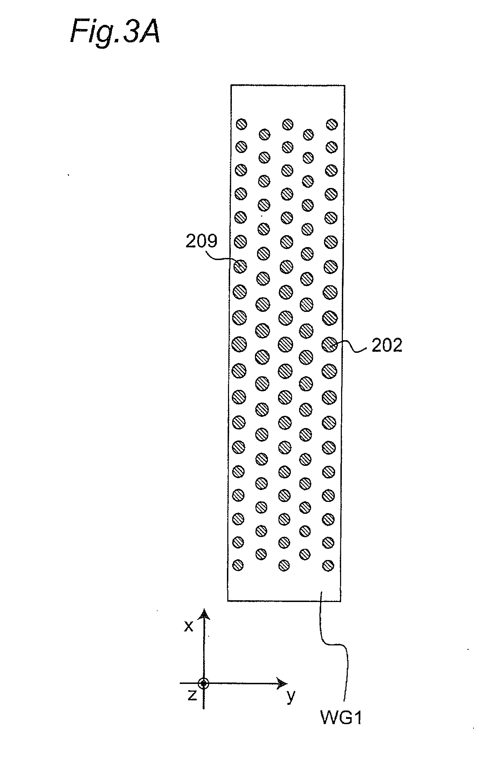

Fig. 3A is a view showing a pattern of the light diffusing part 202 in the first embodiment. It is noted that only the light guide plate WG1 is shown in Fig. 3A, and description of the other light guide plates WG2 - WG8 is substituted and omitted by description of the light guide plate WG1.

As shown in Fig. 3A, a pattern 209 formed of a plurality of dot-like protrusions that are part of spheres is used as the light diffusing part 202 in the first embodiment. The dot-like protrusions form a light diffusion processing part. In this embodiment, the pattern 209 of the light diffusing part 202 is so made that intervals between the dot-like protrusions is constant while the diameter of the dot-like protrusions (size of the dot-like protrusions (diameter of a circumcircle of a dot-like protrusion in a plan view)) varies. It is noted that the dot-like protrusions indeed may of course be circular-shaped in a plan view as in this embodiment, yet may also be elliptical or other-shaped other than circular shapes in a plan view. Light propagating inside the light guide plates WG1 - WG8 propagates while repeating total reflection. Also as shown in Fig. 2, light having collided against the light diffusing part out of the light propagating while repeating total reflection is extracted outside of the light guide plate WG1.

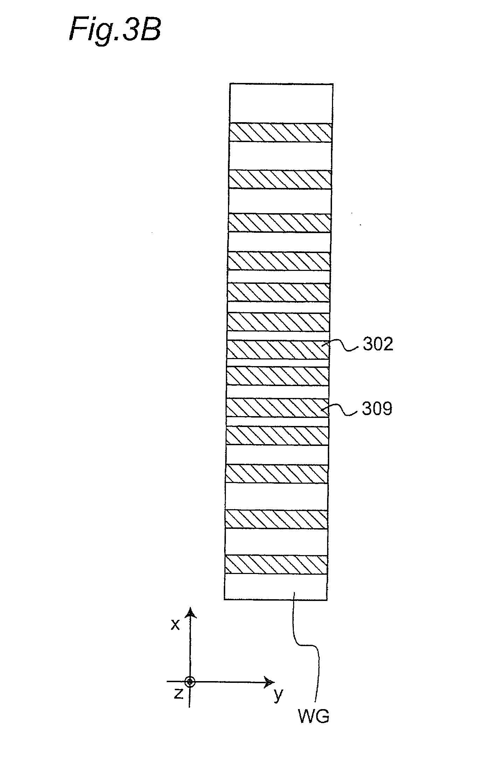

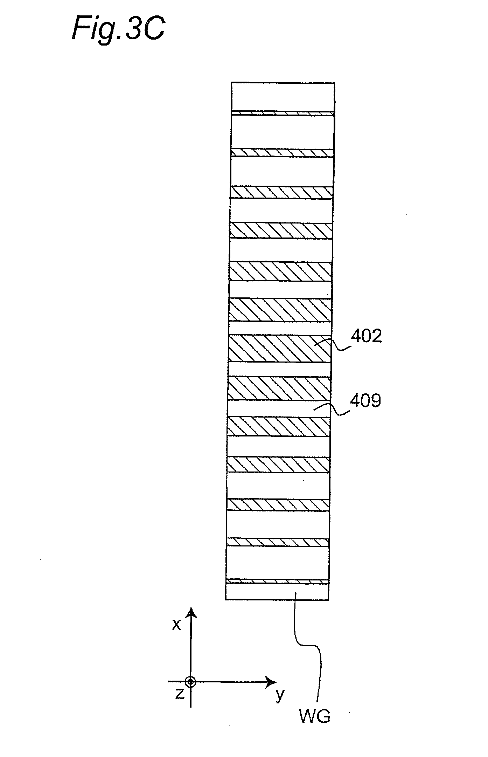

As shown in Fig. 3A, for keeping constant illuminance in the propagation direction (x-axis direction in Fig. 3) at the irradiated surface 104 (see Fig. 1), part of the light diffusing part 202 in vicinities of the incidence side of each of the light guide plates WG1 - WG8 is set to sparse densities while part of the light diffusing part in vicinities of central portion of the light guide plates WG1 - WG8 is set to dense densities. By the arrangement that part of the light diffusing part in vicinities of the central portion is set denser than in the incidence end side, the quantity of light emitted from the light guide plates WG1 - WG8 can be made uniform.

The arrangement of the light diffusing part 202 is not limited to that shown in Fig. 3A. It is also possible that with the dot-like protrusions formed of part of spheres set constant in diameter, the dot-like protrusions may be varied in spacing interval. It is further possible that both dot position and dot diameter may be varied. Making the light diffusing part 202 sparse and dense in density makes it achievable to control illuminance not only in the propagation direction (x-axis) of the light guide plates but also in a direction (y-axis) orthogonal to the propagation direction.

Figs. 3B and 3C are views showing other light diffusing parts.

In more detail, as shown in Fig. 3B, a light diffusing part 302 may be implemented by a pattern 309 formed of a plurality of lines which are disposed so as to be spaced from one another in the propagation direction in each light guide plate WG and which have equal widths extending in the y direction orthogonal to the propagation direction x. In addition, the individual lines constitute light diffusion processing parts.

Further, as shown in Fig. 3C, a light diffusing part 402 may be implemented by a pattern 409 formed of a plurality of lines which are disposed so as to be spaced from one another in the propagation direction in each light guide plate WG and which extend in the y direction orthogonal to the propagation direction, where at least two lines differ in width from the others. In other words, the pattern 409 may be a linear-shaped pattern in which the individual lines are varied in line width stepwise. In this case, the individual lines constitute light diffusion processing parts. In addition, in this invention, the light diffusion processing part may be formed of groove-shaped recess portions.

Moreover, illuminance uniformization in the direction (y axis) orthogonal to the propagation direction may be fulfilled by making the individual lines of the linear-shaped pattern varied with respect to the widthwise direction of the light guide plate, such as discontinuous line widths (dotted-line or wavy-line shapes).

In the first embodiment, the pattern 209 of a plurality of dot-like protrusions formed of part of circular-shaped spheres, as viewed in a plan view, is adopted as shown in Fig. 3A. Also, the individual dot-like protrusions are varied in diameter within a range from about 0.6 mm to about 1.1 mm in both x-axis direction and y-axis direction. Also, the pattern is formed with an interval of 2.5 mm between the dot-like protrusions and with a spacing of 3 mm from an end of the light guide plates WG1 - WG8 in the x direction.

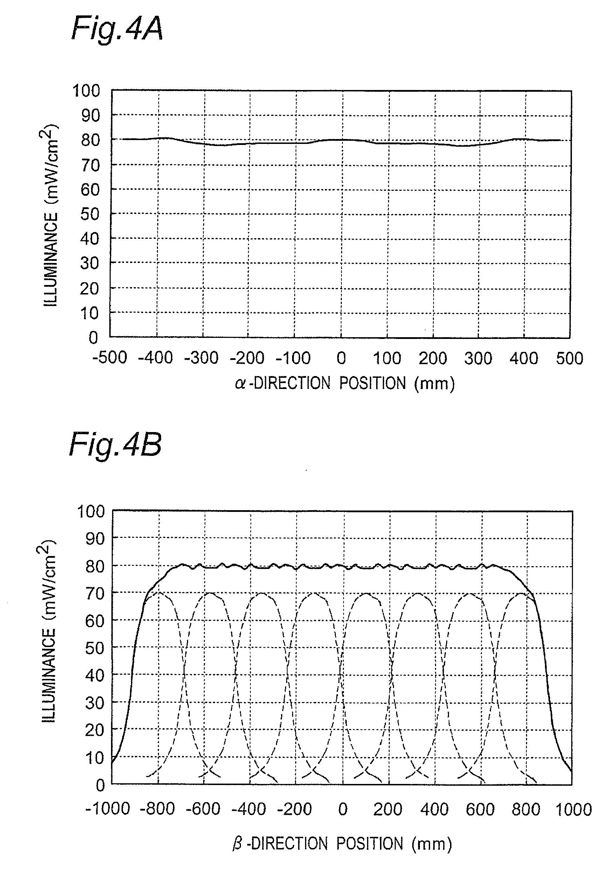

Figs. 4A and 4B show analysis results of illuminance distribution on an $\alpha\beta$ plane with an origin point given by a center of the irradiated surface 104 shown in Fig. 1.

In more detail, Fig. 4A shows an illuminance distribution in an $\alpha$-axis direction (a propagation direction of the light guide plate) at $\beta = 0$ in the irradiated surface 104. Fig. 4B shows an illuminance distribution in a $\beta$-axis direction (a direction orthogonal to the propagation direction of the light guide plate) at $\alpha = 0$ in the irradiated surface 104.

Graphs plotted by broken lines in Fig. 4B show an illuminance distribution of emission from one light guide plate.

In this case, assuming that an illuminance variation $\Delta E$ on the irradiated surface 104 was defined as shown in Equation (1) below, an illuminance variation in the $\alpha$-axis direction was about 2.0% and an illuminance variation in the $\beta$-axis direction was about 3.9%:

```
       .... (1)
   where ΔE = illuminance variation (%),
         Emax = maximum value of irradiance (W/m²),
         Emin = minimum value of irradiance (W/m²).
```

The light guide plates WG1 - WG8 are disposed in an array form. Therefore, illuminance variations in the $\beta$-axis direction can be adjusted by changing intervals or sizes of the dot-like protrusions of the light diffusing part in the $\beta$-axis direction per light guide plate WG1 - WG8, or intervals of left-and-right neighboring light guide plates from one another. As a result of this, it becomes possible to adjust illuminance distributions in vicinities of the center of the irradiated surface 104.

More specifically, the light guide plate WG1 and the light guide plate WG8 placed at ends of the pseudo-sunlight irradiation apparatus are neighboring other light guide plates only on their one side. Accordingly, with cumulation of light radiated from the neighboring light guide plates, illuminance decreases at end portions of the irradiated surface than in vicinities of the center of the irradiated surface. In more detail, with the light diffusing part made identical among all the light guide plates, the illuminance decreases in end portions, i.e. ±800 mm regions, of a target irradiation area, as compared with the other regions as shown in Fig. 4B.

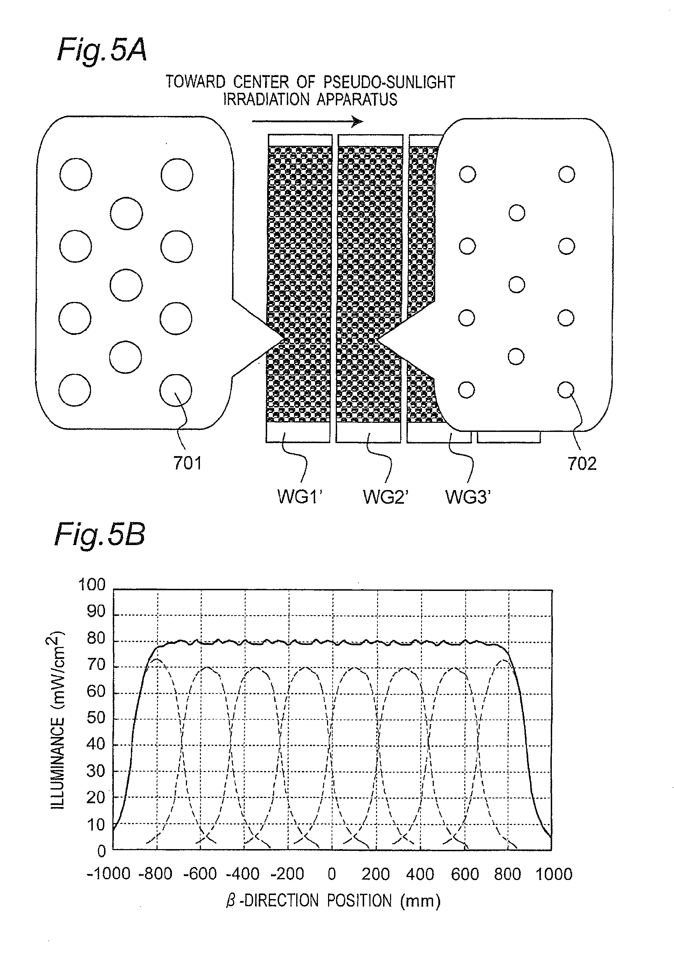

For prevention of illuminance decreases at ends of the target irradiation range, it is appropriate that a quantity of light extracted from end-positioned light guide plates WG1, WG8 (herein, the term "end-positioned light guide plate," when used alone, refers to a light guide plate positioned at an end in a direction orthogonal to the light guide direction of one light guide plate) is higher than a quantity of light extracted from the central-positioned light guide plates WG2 - WG7 (herein, the term "central-positioned light guide plates," when used alone, refers to light guide plates other than light guide plates positioned at ends in a direction orthogonal to the light guide direction of one light guide plate). In one modification of the first embodiment, light diffusing parts of the end-positioned light guide plates WG1', WG8' are changed different from those of the other light guide plates WG2' - WG7' as shown in Fig. 5A. In addition, in this modification, it is assumed that the light guide plates count eight plates, and WG7', WG8' are not shown in Fig. 5A. In this invention, the number of light guide plates is not limited to eight, of course.

Dot-like protrusions 701 of the end-positioned light guide plates WG1', WG8' are set larger in diameter than dot-like protrusions 702 of the central-positioned light guide plates WG2' - WG7', so that a coverage ratio (area ratio) (which will be defined just below) of the dot-like protrusions 701 contained in corresponding regions in the end-positioned light guide plates WG1', WG8' is set higher than a coverage ratio of the central-positioned light guide plates WG2' - WG7.' In this connection, the area ratio is defined as surface area (cm²) of light diffusing parts/surface area (cm²) of the light guide member. Also, in particular, the area ratio of each light guide plate is defined as surface area (cm²) of light diffusing parts of each light guide element/surface area (cm²) of each light guide plate.

Given that the coverage ratio of each light guide plate is defined as surface area (cm²) of the light diffusing part of each light guide plate / total sum (cm²) of areas of side faces where the light diffusing part of each light guide plate is formed, the coverage ratio of an end-positioned light guide plate is higher than the coverage ratio of a central-positioned light guide plate in this embodiment.

In summary, the light guide member of the pseudo-sunlight irradiation apparatus is formed of a plurality of light guide plates WG1' - WG8' arrayed in one direction. Also, the light diffusing part formed of a plurality of dot-like protrusions is formed in a surface opposite to the irradiating surface in each light guide plate WG1' - WG8'. The dot diameter of the dot-like protrusions of the light guide plates WG1', WG8' positioned at ends of the one direction orthogonal to the light guide direction of the light guide plates WG1' - WG8' is set larger than the dot diameter of the dot-like protrusions of the light guide plates WG2' - WG7' positioned at central positions other than the ends of the one direction. The sum of the light diffusing parts of the individual light guide plates WG1' - WG8' constitute a correction part.

In one modification of the first embodiment, corresponding regions are set as each 20 mm $\times$ 20 mm region from an incidence end at which light is incident on the light guide plates WG1' - WG8'. That is, an area occupied by dots contained in each 20 mm $\times$ 20 mm of the light guide plates WG1', WG8' is larger than the area occupied by dots contained in each 20 mm $\times$ 20 mm region of WG2 - WG7.

Since the diameter of dots contained in the end-positioned light guide plates WG1', WG8' is larger than the diameter of dots contained in the central-positioned light guide plates WG2' - WG7', a probability that light propagating inside the end-positioned light guide plates WG1', WG8' may collide with the dot-like protrusions 701 of the light diffusing parts is higher than a probability that light propagating inside the central-positioned light guide plates WG2' - WG7' may collide with the dot-like protrusions 702 of the light diffusing parts. Therefore, a probability that light may be diffused by the light diffusing parts of the end-positioned light guide plates WG1', WG8' becomes higher, so that the quantity of light emitted from the end-positioned light guide plates WG1', WG8' increases, making it possible to suppress relative decreases in end-portion illuminance in the targeted irradiation area. Thus, it becomes implementable to fulfill irradiation with pseudo-sunlight having less illuminance variations.

As shown above, the area occupied by the light diffusing parts present in the corresponding regions of the end-positioned light guide plates WG1', WG8' is made larger than the area occupied by the light diffusing parts present in the corresponding regions of the central-positioned (other than end-positioned) light guide plates WG2' - WG7', by which light extraction efficiency can be enhanced in end regions of the targeted irradiation range.

Fig. 5B shows the illuminance of the irradiated surface in the above-described modification. In the illuminance of the irradiated surface in the modification, as shown in Fig. 5B, illuminance decreases in vicinities of $\pm 800$ mm are smaller than in Fig. 4B.

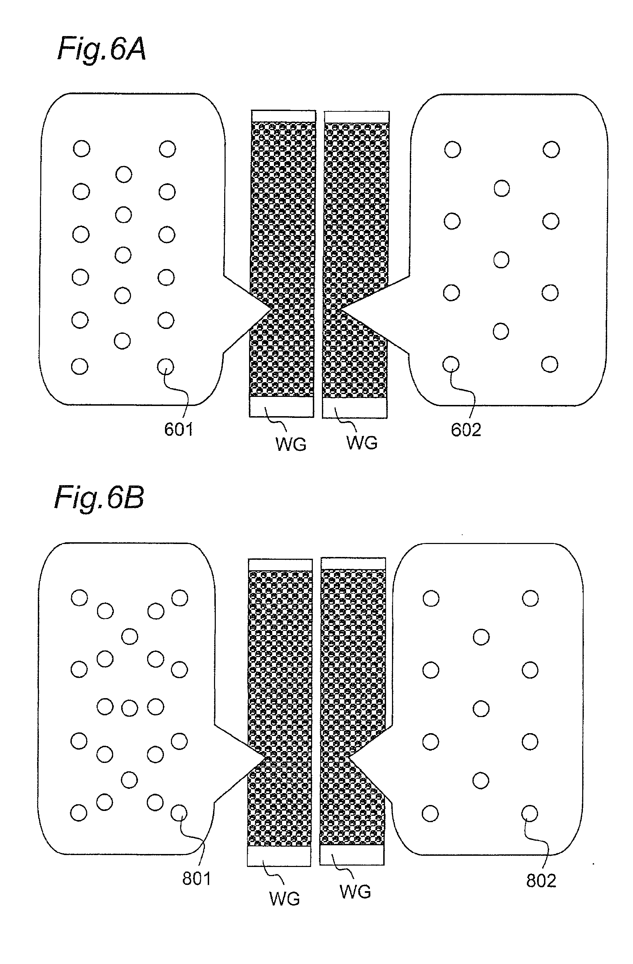

In addition, in the first embodiment, illuminance uniformization on the irradiated surface 104 is realized by increasing the dot diameter as shown in Fig. 5A. However, it is also allowable that, as shown in Fig. 6A, intervals of dot-like protrusions 601 of the end-positioned light guide plates are made smaller than intervals of dot-like protrusions 602 of the central-positioned light guide plates. With the dot-like protrusions 601 disposed dense in the corresponding regions, the area occupied by the light diffusing parts of the end-positioned light guide plates becomes larger than the area occupied by the light diffusing parts of the central-positioned light guide plates. Accordingly, the probability that light may be diffused by the light diffusing parts becomes higher, so that the quantity of light emitted from the end-positioned light guide plates increases.

It is further allowable that, as shown in Fig. 6B, the number of dot-like protrusions 801 of the end-positioned light guide plates is made larger than the number of dot-like protrusions 802 of the central-positioned light guide plates so as to increase the probability that light propagating inside the light guide plates may impinge on the light diffusing parts.

Also, on condition that a ratio of an area occupied by dot-like protrusions relative to planar portions of the surface area of a light guide plate in a plan view is defined as a coverage ratio, the coverage ratio may be made different between end-positioned light guide plates and the other central-positioned light guide plates. That is, the diameter of dot-like protrusions in a half region ranging from the center toward outside of the apparatus may be increased, or surfaces on which the light diffusing parts are formed may be increased.

Also, with an end-positioned light guide plate taken as a reference, the light diffusing parts of the central-positioned light guide plates may be varied. More concretely, the dot diameter of the light diffusing parts of the central-positioned light guide plates may be decreased. Otherwise, for example, intervals of the dot-like protrusions may be increased.

With use of a plurality of light guide plates having such structures as described above, it becomes implementable to prevent relative decreases in illuminance in the range of irradiation fulfilled by only the light from one light guide plate. Moreover, also in cases where a plurality of light guide plates are disposed in an array form, a pseudo-sunlight irradiation apparatus having less illuminance variations within the targeted irradiation range can be realized. Furthermore, the irradiation area that meets a specified illuminance can be enlarged.

In addition, in the first embodiment, the corresponding regions are defined as each 20 mm × 20 mm region from an incidence end at which light becomes incident on the light guide plate. However, without being limited to this, the regions may be varied as required depending on the size of the light guide plates, the manufacturable minimum size of the light diffusing parts, and the like.

(Second Embodiment)

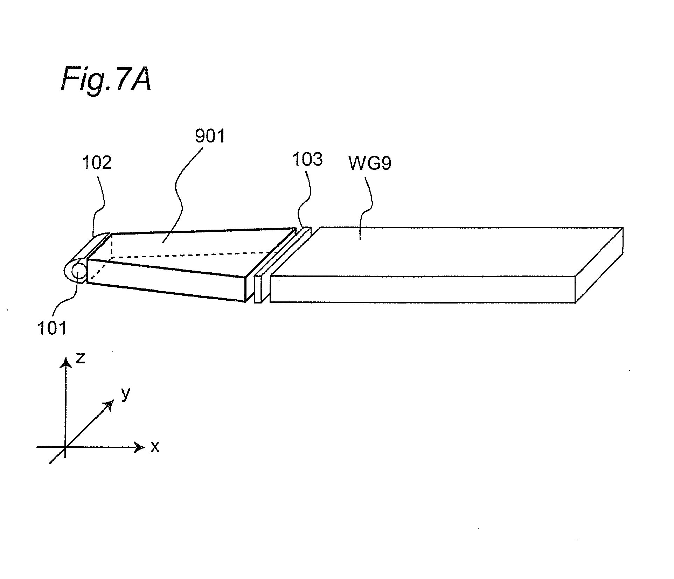

Fig. 7A is a conceptual view for explaining the essence of functions of the spectral adjustment filter 103, as well as an incident angle control part, in a pseudo-sunlight irradiation apparatus according to a second embodiment.

It is noted that in Fig. 7A, only a row of a light guide plate designated by WG9 is extracted and a one-side optical system alone for the light guide plate WG9 is shown for the sake of simplified explanation. Also in the second embodiment, the same components, parts and members as in the first embodiment are designated by the same reference signs as in the first embodiment, with their description omitted.

The spectral adjustment filter 103 is implemented by using a multilayered film. Generally, the multilayered film has an incident angle dependence, so that increased incident angles may cause development of characteristics deviated from originally intended performance. Thus, there is a need for controlling the incident angle for the spectral adjustment filter 103 in order to obtain a desired spectrum.

In the pseudo-sunlight irradiation apparatus of the first embodiment, incident angles in a +z to -z direction (thicknesswise direction of the light guide plate) for the spectral adjustment filter 103 can be controlled by the reflector 102, while incident angles in a +y to -y direction (widthwise direction of the light guide plate) cannot be controlled. For improvement in this point, a pseudo-sunlight irradiation apparatus also having a control part for controlling incident angles in the +y to -y direction (widthwise direction of the light guide plate) will be described in the second embodiment.

As shown in Fig. 7A, light emitted from the light source 101 is controlled by the reflector 102 so that a directional distribution in the thicknesswise direction for the light guide plate WG9 is restricted to within a certain angular range. Light reflected by the reflector 102 is led to a taper member 901 as an example of a light propagating member.

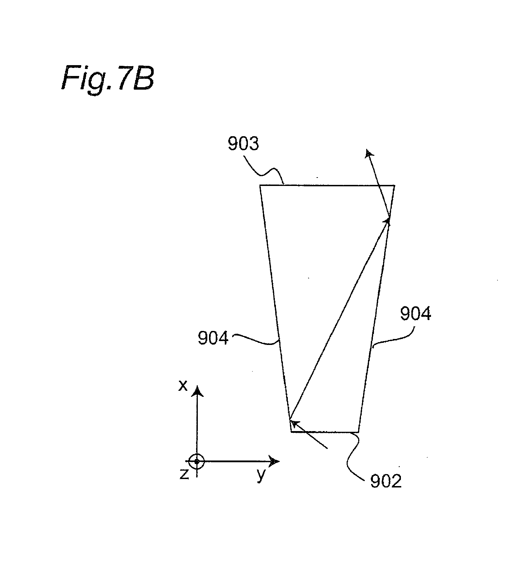

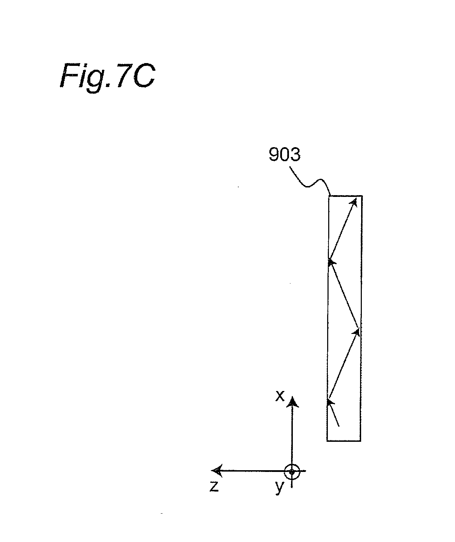

Fig. 7B is a top view of the taper member 901 as viewed from the light irradiation side. Fig. 7C is a view of the taper member 901 as viewed from its side face side.

As shown in Fig. 7B, the taper member 901 is so shaped that an area of an outgoing surface 903 of the taper member 901 is larger than that of an incident surface 902 of the taper member 901, while a widthwise side face 904 is inclined with respect to the light guide plate WG. Also, the taper member 901 is a transparent member which is, specifically, made from a material of high permeability such as BK7, quartz and acrylic material. In the second embodiment, the taper member 901 is prismatic-shaped. However, without being limited to this, the taper member may have a circular or other-shaped opening on its incident side or outgoing side.

Light reflected by the reflector 102 goes incident on the incident surface 902 inward of the taper member 901. The light incident on the taper member 901 propagates inside while repeating total reflection. In this case, since the side face 904 is inclined as shown in Fig. 7B, a radiation angle of light radiated from the outgoing surface 903 of the taper member 901 is made smaller than the incident angle due to the repetition of total reflection.

According to the second embodiment, by the reflector 102, the directional distribution in the thicknesswise direction for the light guide plate WG9 can be restricted to within a certain range. Also, by placement of the taper-shaped member 901 in which the outgoing surface 903 is larger in area than the incident surface 902 as shown in Figs. 7A and 7B, the widthwise directional distribution of the light guide plate WG9 can also be restricted to within a certain range. Accordingly, the incident angle for the spectral adjustment filter 103 can be restricted to within a certain range, so that desired filter characteristics can be obtained.

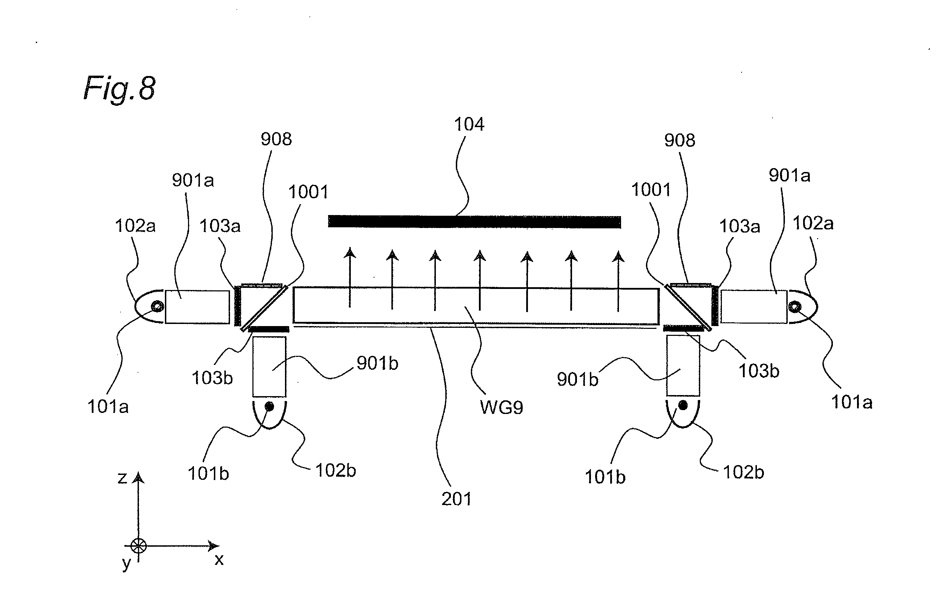

Fig. 8 is a view showing the pseudo-sunlight irradiation apparatus of the second embodiment.

The pseudo-sunlight irradiation apparatus of the second embodiment has the taper member 901 shown in Figs. 7A and 7B (shown as 901a, 901b in Fig. 8), and also has two kinds of light sources 101a and 101b of different spectra so as to obtain a spectrum closer to the solar spectrum. In this case, for example, a halogen lamp may be used as the light source 101a while a xenon lamp may be used as the light source 101b.

Light emitted from the individual light sources 101a, 101b is led by reflectors 102a, 102b to the taper members 901a, 901b corresponding to the reflectors 102a, 102b, respectively.

Light, of which the radiation angle in the thicknesswise direction of the light guide plate WG9 is controlled by the reflectors 102a, 102b, is led to the taper members 901a, 901b corresponding to their optical paths, respectively. Then, the radiation angle in the widthwise direction of the light guide plate WG is controlled by the taper members 901a, 901b. It is noted that the taper members 901a, 901b may be changed in size depending on the shape and size of the light sources 101a, 101b.

In addition, it is not necessarily required that one taper member is provided in correspondence to one light guide plate WG9. Also, one taper member may be provided on one reflector. Further, a plurality of taper members may be provided on one reflector.

Referring to Fig. 8, light emitted from the taper members 901a, 901b goes incident on spectral adjustment filters 103a, 103b corresponding to emission spectra of the light sources 101a, 101b, respectively. Subsequently, two optical paths are combined together by a filter 1001. Then, pseudo-sunlight generated by the combination of the optical paths is applied toward the light guide plate WG9. In this case, the filter 1001 is a filter having a wavelength selecting function. This filter 1001 has a characteristic of transmitting light of longer wavelength range by referencing a border of wavelengths 650 nm - 700 nm as an example while reflecting light of shorter wavelength range. In addition, although not described in detail, reference sign 908 denotes a light shielding member in Fig. 8.

In a case where the light guide plate WG9 and the taper members 901a, 901b are different in thickness from each other, an optical member having an inclination in the thicknesswise direction may be inserted between the filter 1001 and the light guide plate WG9 so as to enhance the coupling efficiency.

Also in the second embodiment, pseudo-sunlight led to the light guide plate WG9 propagates inside the light guide plate WG9 so as to be applied toward the irradiated surface 104 by the light diffusing part formed in the light guide plate WG9, as in the first embodiment.

(Third Embodiment)

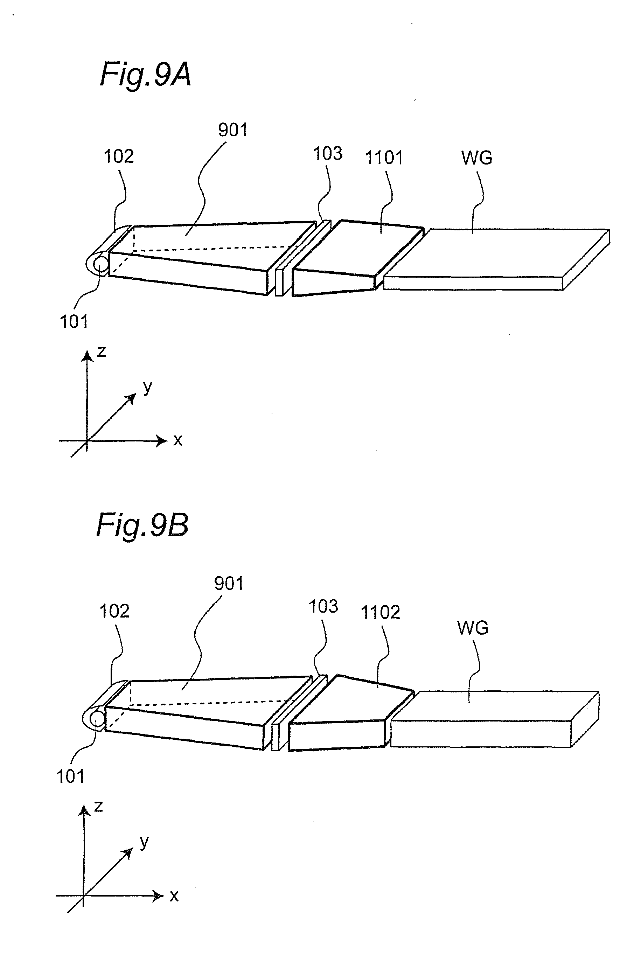

Fig. 9A is a perspective view of an optical system forming part of a pseudo-sunlight irradiation apparatus according to a third embodiment of the invention.

In this third embodiment, the same components, parts and members as in the first embodiment are designated by the same reference signs, with description of the components or the like omitted.

In the first embodiment, the arrangement interval of the light diffusing parts 202 in the corresponding regions and the shape of dot-like protrusions are changed between the end-positioned light guide plates WG1, WG8 and the other central-positioned light guide plates WG2 - WG8, thereby giving differences in the coverage ratio of the light diffusing parts 202. In the third embodiment, the light guide plates WG are made to have differences in shape thereamong, so that end-positioned light guide plates WG and central-positioned light guide plates WG are made different from each other in light extraction performance of the light diffusing parts.

In the third embodiment, only the end-positioned light guide plates WG are made thinner in thickness as shown in Fig. 9A. The thinner thickness causes the surface area to be decreased as compared with the other central-positioned light guide plates (not shown), so that quantity of light extracted by the light diffusing parts can be increased.

The pseudo-sunlight irradiation apparatus of the third embodiment, as shown in Fig. 9A, has an optical-coupling use taper member 1101 that gradually decreases in thickness toward the light guide plate WG. In this way, decreases in coupling efficiency with the light guide plate WG due to the thinning of the thickness of the light guide plate WG is suppressed. The taper member 901 and the taper member 1101 constitute a light propagating member.

According to the third embodiment, since the light guide plate WG is made thinner in thickness as shown in Fig. 9A, the number of times of total reflection within the light guide plate WG is increased so that the probability of collisions against the light diffusing part is increased. Thus, the quantity of light radiated from the light guide plate WG can be increased.

Fig. 9B is a perspective view of an optical system forming part of a pseudo-sunlight irradiation apparatus according to a modification of the third embodiment.

In the pseudo-sunlight irradiation apparatus of the modification of the third embodiment, as shown in Fig. 9B, an end-positioned light guide plate WG is made narrower in width. The narrower width causes the surface area to be decreased as compared with the other light guide plates, so that quantity of light extracted by the light diffusing part can be increased. For prevention of decreases in coupling efficiency with the light guide plate WG due to the narrower width of the light guide plate WG, an optical-coupling use taper member 1102 that gradually decreases in width is provided in the modification shown in Fig. 9B. The taper member 901 and the taper member 1102 constitute a light propagating member. Since the light guide plate WG is made narrower in width as shown in Fig. 9B, the number of times of total reflection within the light guide plate WG is increased so that the probability of collisions against the light diffusing part is increased. Thus, the quantity of light radiated from the light guide plate WG can be increased.

The pseudo-sunlight irradiation apparatus of the first embodiment has the light source 101 outside both sides in the light guide direction of the light guide plates WG1 - WG8. However, in the invention, the pseudo-sunlight irradiation apparatus may have a light source outside only one side in the light guide direction of the light guide plate.

Also, the pseudo-sunlight irradiation apparatus of the first embodiment is a so-called edge type apparatus having the light source 101 outward in the light guide direction of the light guide plates WG1 - WG8. However, the apparatus of the invention may also be a so-called direct type apparatus in which a plurality of optical systems including a light source, a light guide member and a filter are disposed.

Also, in the first embodiment, the quantity of light emitted from the light source 101 is generally uniform in directions orthogonal to a light guide direction of a plurality of light guide plates WG1 - WG8. However, the quantity of light emitted from the light source may also be varied in directions orthogonal to the light guide direction of a plurality of light guide plates so that a quantity of light emitted from one end portion side in directions orthogonal to the light guide direction is larger than a quantity of light emitted from a central portion in the direction orthogonal to the light guide direction. In addition, this structure can be realized also by increasing the quantity of light from an edge portion, or by decreasing the quantity of light of the central portion, or by adjusting the quantities of light of the edge portion and the central portion.

Also in the first embodiment, the light guide member is implemented by eight light guide plates WG1 - WG8. However, in this invention, the light guide member may be implemented by only one light guide plate, or implemented by two to seven light guide plates, or implemented by nine or more light guide plates.

Also in the first embodiment, the light diffusing part 202 is formed on the opposite surface 208 opposed to the irradiating surface 207 of the generally rectangular parallelopiped-shaped light guide plates WG1 - WG8. However, in this invention, the light diffusing part has only to be formed on at least one surface out of four side faces parallel to the light guide direction of the generally rectangular parallelopiped-shaped light guide plates. Also, in a case where the light diffusing part is formed on a plurality of side faces out of the four side faces parallel to the light guide direction of the generally rectangular parallelopiped-shaped light guide plates, the coverage ratio of the light diffusing part (defined as area (cm$^2$) forming the light diffusing part in side face / area (cm$^2$) of each side face) may be varied among the plurality of surfaces.

In the above-described embodiments, the correction part has the light diffusing part and the surface area of the light guide plate. However, the correction part in this invention may have such a light source that a quantity of light emitted from an end portion in a direction orthogonal to the light guide direction of the light guide plates is larger than a quantity of light emitted from the central portion in the direction orthogonal to the light guide direction of the light guide plates.

The correction part in this invention may also include a placement structure of a light source and a plurality of light guide plates as described below. That is, a distance from a light guide plate positioned at an end in a direction orthogonal to the light guide direction of one light guide plate to the light source is defined as a first distance, while a distance from a light guide plate positioned at a center in a direction orthogonal to the light guide direction of the light guide plates (i.e., from a light guide plate other than light guide plates positioned at ends) to the light source is defined as a second distance longer than the first distance. The correction part in this invention may also have a placement structure of a light source and a plurality of light guide plates in which an incidence efficiency of light on the light guide plate positioned at an end is made larger than an incidence efficiency of light on the light guide plates positioned at a center as shown above.

Also, the correction part in this invention may also include a placement structure of a light source and only one light guide plate as described below. That is, a distance from an end portion in a direction orthogonal to the light guide direction of one light guide plate to the light source is defined as a first distance, while a distance from a central portion in a direction orthogonal to the light guide direction of the one light guide plate to the light source is defined as a second distance longer than the first distance. The correction part in this invention may also have a placement structure of a light source and one light guide plate in which an incidence efficiency of light on an end portion of the light guide plate is made larger than an incidence efficiency of light on the central portion of the light guide plate as shown above.

Also, the correction part in this invention may be implemented by one or more filters instead of the light diffusing part. That is, the correction part may include one or more filters so that by the one or more filters, a quantity of light incident on an end in a direction orthogonal to the light guide direction of the one or more filters is made larger than a quantity of light incident on a center in the direction orthogonal to the light guide direction. Alternatively, the correction part may include one or more filters so that by the one or more filters, a quantity of light incident on a center in a direction orthogonal to the light guide direction of one or more light guide plates is made larger than a quantity of light incident on an end in the direction orthogonal to the light guide direction.

Also, the correction part in this invention may be implemented by a reflector having a structure shown below instead of the light diffusing part. That is, it is also allowable that an opening area per unit distance may be varied, or an opening direction may be varied, between an end-positioned portion of a reflector opening and a central-positioned portion of the reflector opening in a direction orthogonal to the light guide direction of one or more light guide plates. In this way, it may be arranged that light led by the reflector becomes incident more on end-positioned light guide plates than on central-positioned light guide plates in a direction orthogonal to the light guide direction with regard to one or more light guide plates. Furthermore, it is allowable that an opening area per unit distance may be varied, or an opening direction may be varied, between an end-positioned portion of a reflector opening and a central-positioned portion of the reflector opening in a direction orthogonal to the light guide direction of one or more light guide plates, so that light led by the reflector becomes incident less on central-positioned light guide plates than on end-positioned light guide plates in a direction orthogonal to the light guide direction with regard to one or more light guide plates.

Also, the correction part in this invention may be implemented by a light source which is provided in a side portion of a light guide plate in a direction orthogonal to the light guide direction of the light guide plate, instead of the light diffusing part. By providing such a light source, the quantity of light emitted from end portions in the direction orthogonal to the light guide direction in the light guide member can be made larger than the quantity of light emitted from a central portion in the direction orthogonal to the light guide direction in the light guide member. Furthermore, in cases where a plurality of light guide plates are included, light may be incident on a side face of a light guide plate positioned at an end in the direction orthogonal to the light guide direction. Further, in a case where the end-positioned light guide plate is rectangular parallelepiped-shaped, light may be incident on one or more side faces out of the four side faces.

Also in this invention, the correction part may include a structure that a mean diameter of a plurality of protrusions of end1-positioned light guide plates is larger than a mean diameter of a plurality of protrusions of central-positioned light guide plates. Also in this invention, the correction part may include a structure that a mean distance between neighboring protrusions of end-positioned light guide plates is smaller than a mean distance between neighboring protrusions of central-positioned light guide plates. Further in this invention, the correction part may include a structure that the shortest distance between neighboring protrusions of end-positioned light guide plates is smaller than the shortest distance between neighboring protrusions of central-positioned light guide plates. Moreover in this invention, the correction part may be implemented by a plurality of groove-shaped recess portions which are positioned so as to be spaced from one another in the light guide direction in each light guide element and which are formed on one surface extending in a direction orthogonal to the light guide direction, where the shortest distance of recess portions of end-positioned light guide elements is shorter than the shortest distance of recess portions of central-positioned light guide elements. Alternatively, the correction part may be implemented by a plurality of groove-shaped recess portions which are positioned so as to be spaced from one another in the light guide direction in each light guide element and which are formed on one surface extending in a direction orthogonal to the light guide direction, where a mean distance of recess portions of end-positioned light guide elements is shorter than a mean distance of recess portions of central-positioned light guide elements.

Also in this invention, the light diffusing part of each light guide plate may be implemented by a plurality of strip-like portions which are positioned so as to be spaced from one another in a light guide direction of each light guide plate and which extend in a direction orthogonal to the light guide direction, and the correction part may include a structure that a total sum of widths of the plurality of strip-like portions in end-positioned light guide plates is larger than a total sum of widths of the plurality of strip-like portions in central-positioned light guide plates.

Also in this invention, a quantity of light emitted from end portions (edge portions) of the light guide member may be adjusted, as required, by adjusting the spectrum with use of a spectrum adjustment filter and by adjusting the transmittance for light to be transmitted by the spectrum adjustment filter.

Also in this invention, it is also allowable that, for example, with a light generation part implemented by a plurality of light sources, a quantity of light emitted from the light generation part is made nonuniform with respect to one direction, or that dot-like protrusions or groove-shaped recess portions are formed locally nonuniform in the light guide member, so that an illuminance at the irradiated surface of light applied from the central portion of the light guide member and an illuminance at the irradiated surface of light applied from end portions of the light guide member are adjusted. Then, it is allowable that the illuminance at the irradiated surface of light applied from the central portion of the light guide member is made smaller, while the illuminance at the irradiated surface of light applied from the end portion of the light guide member is made larger. It is further allowable that the illuminance at the irradiated surface of light applied from the central portion of the light guide member is not adjust, while the illuminance at the irradiated surface of light applied from the end portion of the light guide member is made larger. It is also allowable that the illuminance at the irradiated surface of light applied from the central portion of the light guide member is made smaller, while the illuminance at the irradiated surface of light applied from the end portion of the light guide member is not adjusted. It is further allowable that the illuminance at the irradiated surface of light applied from the central portion of the light guide member is made larger, while the illuminance at the irradiated surface of light applied from the end portion of the light guide member is made quite large and larger than the illuminance at the irradiated surface of light applied from the central portion of the light guide member.

REFERENCE SIGNS LIST

| 101 | light source |
| 102 | reflector |
| 103 | spectral adjustment filter |
| 104 | irradiated surface |

| WG1, WG8 | end-positioned light guide plate |
|---|---|
| WG2 - WG7 | central-positioned light guide plate |
| SL | emitted light from light guide plate |
| 200 | pseudo-sunlight |
| 201 | reflecting plate |
| 202 | light diffusing part (correction part) |
| 203 | light diffusing member |
| 901 | taper member |
| 1001 | filter |
| 1101 | taper member for optical coupling |
| 1102 | taper member for optical coupling |

**Claims**

1. A pseudo-sunlight irradiation apparatus for irradiating an irradiated surface with light having an emission spectrum of sunlight, the apparatus comprising:

   a light guide member including an incident surface for allowing light to be incident thereon, and an irradiating surface for irradiating the irradiated surface with light guided from the incident surface; and
   a correction part for performing correction so that an illuminance at the irradiated surface irradiated from a central portion of the light guide member and an illuminance at the irradiated surface irradiated from any one of end portions orthogonal to a light guide direction of the light guide member are made uniform.

2. The pseudo-sunlight irradiation apparatus as claimed in Claim 1, wherein
   the correction part includes a light diffusing part for scattering light incident on the incident surface of the light guide member and extracting light from the irradiating surface, and
   the light diffusing part is formed at different area ratios between the central portion of the light guide member and the end portion of the light guide member so as to achieve an illuminance uniformity.

3. The pseudo-sunlight irradiation apparatus as claimed in Claim 2, wherein
   the light guide member is formed of a plurality of light guide elements, and
   the light diffusing part of each light guide element has a plurality of light diffusion processing parts, where the light diffusion processing parts are made to have difference thereamong in at least one of shape, area and shortest neighboring distance so that the area ratio is higher in a light guide element positioned at the end portion than in a light guide element positioned at the central portion.

4. The pseudo-sunlight irradiation apparatus as claimed in Claim 2 or 3, wherein
   the light guide member is formed of a plurality of light guide elements, and
   a light guide element positioned at the end portion meets at least one of conditions, i.e. being thinner in thickness than a light guide element positioned at the central portion or being smaller in width than a light guide element positioned at the central portion, so that the light guide element positioned at the end portion is higher in area ratio than a light guide element positioned at the central portion.

5. The pseudo-sunlight irradiation apparatus as claimed in any one of Claims 1 to 4, further comprising a spectrum adjustment filter for adjusting light, which is derived from a light source for making light incident on the incident surface, to light having an emission spectrum of sunlight.

**6.** The pseudo-sunlight irradiation apparatus as claimed in Claim 5, further comprising a taper member for controlling directivity of light derived from the light source so that incident angle of light incident on the spectrum adjustment filter is restricted to within a certain range.

**7.** The pseudo-sunlight irradiation apparatus as claimed in any one of Claims 1 to 6, further comprising a light diffusing member which is placed at such a position as to allow light radiated from the irradiating surface of the light guide member to be incident thereon and which diffuses light radiated from the irradiating surface of the light guide member.

**8.** The pseudo-sunlight irradiation apparatus as claimed in any one of Claims 1 to 7, further comprising a reflecting member for allowing light leaked from the light guide member to pass via inside of the light guide member and reach the irradiating surface.

EP 2 623 955 A1

*Fig.1*

Fig.2

## Fig.3A

*Fig.3B*

302

309

WG

x

z

y

# Fig.3C

## Fig.4A

## Fig.4B

## Fig.5A

TOWARD CENTER OF PSEUDO-SUNLIGHT
IRRADIATION APPARATUS

701

WG1'  WG2'  WG3'

702

## Fig.5B

## Fig.6A

601    WG    WG    602

## Fig.6B

801    WG    WG    802

## Fig.7A

*Fig.7B*

*Fig.7C*

903

EP 2 623 955 A1

*Fig.8*

*Fig.9A*

*Fig.9B*

*Fig.10*

WIDTHWISE

HEIGHTWISE

| | INTERNATIONAL SEARCH REPORT | International application No. |
|---|---|---|
| | | PCT/JP2011/056210 |

A. CLASSIFICATION OF SUBJECT MATTER
*G01N17/00*(2006.01)i, *F21S2/00*(2006.01)i

According to International Patent Classification (IPC) or to both national classification and IPC

B. FIELDS SEARCHED

Minimum documentation searched (classification system followed by classification symbols)
G01N17/00, F21S2/00

Documentation searched other than minimum documentation to the extent that such documents are included in the fields searched
Jitsuyo Shinan Koho          1922–1996     Jitsuyo Shinan Toroku Koho    1996–2011
Kokai Jitsuyo Shinan Koho    1971–2011     Toroku Jitsuyo Shinan Koho    1994–2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2004-228018 A  (Minebea Co., Ltd.),<br>12 August 2004 (12.08.2004),<br>entire text; all drawings<br>(Family: none) | 1-3,5-8<br>4 |
| Y | JP 2009-522539 A  (Solar Tec AG.),<br>11 June 2009 (11.06.2009),<br>entire text; all drawings<br>& US 2010/0066382 A      & EP 1966617 A<br>& WO 2007/076846 A1     & DE 102006034793 A<br>& CN 101351715 A | 1-3,5-8 |
| Y | JP 2008-077888 A  (Sharp Corp.),<br>03 April 2008 (03.04.2008),<br>entire text; all drawings<br>(Family: none) | 6 |

☒  Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    07 June, 2011 (07.06.11) | Date of mailing of the international search report<br>    14 June, 2011 (14.06.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/056210

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2005-011958 A  (Canon Inc.),<br>13 January 2005 (13.01.2005),<br>paragraph [0255]<br>(Family: none) | 5 |
| A | JP 07-098416 A  (Fujitsu Ltd.),<br>11 April 1995 (11.04.1995),<br>entire text; all drawings<br>& US 5764845 A | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009145254 A
- JP 3500352 A

- JP H8334765 A